# EUROPEAN PATENT SPECIFICATION

(11) **EP 3 017 721 B1**
(45) Date of publication and mention of the grant of the patent: **13.12.2017**
(21) Application number: 15193774.5
(22) Date of filing: 10.11.2015
(51) Int. Cl.: A47C 5/10, F16B 12/44, A47C 5/04, A47C 11/00, F16B 7/02

(54) **MECHANISM FOR FIXING A SUPPORTING PORTION OF A BENCH TO THE REMAINING BENCH FRAME, SUPPORTING PORTION PROVIDED WITH SUCH FIXING MECHANISM, AND BENCH FRAME PROVIDED WITH SUCH SUPPORTING PORTION**
MECHANISMUS ZUR BEFESTIGUNG EINES STÜTZABSCHNITTS EINER BANK ZUM RESTLICHEN BANKRAHMEN, STÜTZABSCHNITT MIT SOLCH EINEM BEFESTIGUNGSMECHANISMUS UND BANKRAHMEN MIT SOLCH EINEM STÜTZABSCHNITT
MÉCANISME DE FIXATION D'UNE PARTIE DE SUPPORT D'UN BANC À LA TRAME DE BANC RESTANTE, PARTIE DE SUPPORT POURVUE D'UN TEL MÉCANISME DE FIXATION ET CHÂSSIS POURVU DE CETTE PARTIE DE SUPPORT

(30) Priority: 10.11.2014 IT PD20140299
(43) Date of publication of application: 11.05.2016
(73) Proprietor: CERANTOLA S.P.A., 31037 LORIA, Frazione RAMON, TV (IT)
(72) Inventor: CERANTOLA, Roberto, 31037 Loria TV (IT)
(74) Representative: Modiano, Micaela Nadia

(56) References cited:
- FR-A1- 2 242 054
- GB-A- 621 481
- GB-A- 1 016 582
- GB-A- 2 229 909
- US-A- 5 765 960

## Description

The present invention relates to a mechanism for fixing a supporting portion of a bench to the remaining bench frame, to a supporting portion provided with such fixing mechanism, and to a bench frame provided with such supporting portion.

Typically benches, in particular benches for use in waiting rooms of public and private offices, are constituted by a frame with a transverse beam on which the seats are fixed in a row, mutually adjacent, and the supporting portions, which typically are constituted by supporting legs or by posts, are fixed at the ends.

Nowadays the supporting portions are fixed to the beam of the frame by way of a U bolt and fixing screws, and each end of the beam is closed with a respective end-tube cap.

Such fixing system, although it is nowadays very widespread, requires long installation times and the production and use of numerous components.

Furthermore, benches with the fixing system of the type described exhibit the drawback of having an aesthetic impact that is not always appreciated.

Another drawback is the fact that often, as is known, the fixings by way of screws are also subject to maintenance because over time the screws can loosen and fall out of their holes.

Today the need is felt for a rapid and long-lasting fixing of the supporting portions to the remaining frame of the bench, which is not subject to the loosening of the fixing screws.

FR 2 242 054 A1 discloses a furniture chair with or without arm rests and built to requisite length from plastic components. The basic support component for the chair is 'h' shaped forming backrest seat and legs in section. Circular holes in the web locate longitudinal tubular members with expandable screw joints thus building a three-dimensional frame which receives lath infill to complete seat and backrest. Further references considered to be relevant as background art useful to understand the invention are cited below:
- JP 2009-106413 A,
- US 5,765,960 A.

The aim of the present invention is to provide a mechanism for fixing the supporting portions of the bench to the remaining bench frame which enables a rapid and long-lasting association.

Within this aim, an object of the invention is to provide a fixing mechanism that makes it possible to carry out the association between the supporting portions and the remaining bench frame, in a simple manner.

Another object of the invention is to provide a fixing mechanism that improves the aesthetic impact of benches with respect to those obtainable with traditional fixing mechanisms.

In accordance with the invention, there is provided an assembled bench as defined in the appended claims.

Further characteristics and advantages of the invention will become better apparent from the detailed description that follows of a preferred, but not exclusive, embodiment of the fixing mechanism, of the supporting portion and of the bench frame according to the invention, which are illustrated, by way of non-limiting example, in the accompanying drawings, wherein:
- Figure 1 is a perspective view of a bench with a frame according to the invention;
- Figure 2 is an exploded perspective view of an enlarged portion of the bench frame, with a supporting portion and fixing mechanism according to the invention;
- Figure 3 is a cross-sectional view of the same portion as in Figure 2, after fixing the supporting portion to the remaining bench frame with the fixing mechanism according to the invention;
- Figure 4 is a cross-sectional view of the same portion as in Figure 3, at right angles to the previous view.

With reference to the figures, the fixing mechanism according to the invention is generally designated with the reference numeral 10.

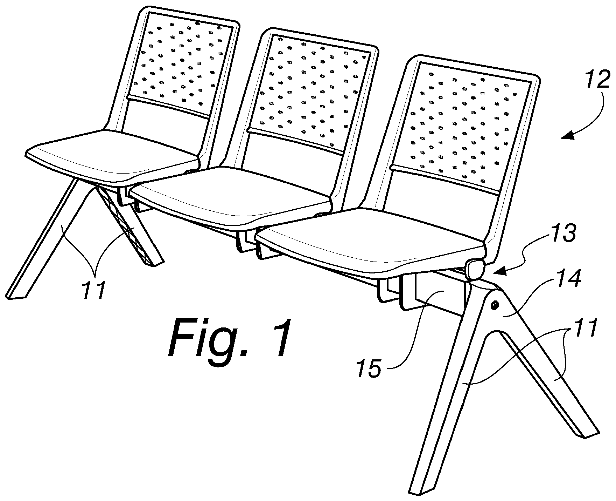

Figure 1 shows an assembled bench 12, with supporting portions 11 and a bench frame 13. The supporting portions 11 are constituted by legs provided in pairs in a single body shaped like an upside-down V, extending in a pair from a portion 14 for connection to a tubular transverse element 15 of the bench frame 13 which acts as a support for the laterally adjacent seats. Alternatively, according to the model of bench, the supporting portion can be constituted, for example, by a post connected in an upward region to the tubular transverse element and in a downward region to a supporting foot, the latter sometimes to be fixed to the floor, or by legs connected in pairs by a resting base to be fixed to the floor, or indeed there can be multiple, parallel transverse elements, for example two in number. In the latter case each individual leg constituting a supporting portion can be connected to the respective tubular transverse element.

The supporting portions 11 are each associated with the bench frame 13 by way of a fixing mechanism 10, which comprises a first hollow body 16 which is integral with the connecting portion 14 of the supporting portions 11, it being preferably made in a single body with it and with the supporting portions 11 by way of molding plastic material or by aluminum die casting. Alternatively, the first hollow body 16 can be rendered integral with the connecting portion 14, for example by interlocking, by inserting it from the outer side of the latter.

In any case the bench frame 13 is provided with supporting portions 11 which in turn are provided with the fixing mechanism 10.

The first hollow body 16 extends from the connecting portion 14 from the side for association with the bench frame 13 in four longitudinal portions 17, in the example shown, which are mutually separated by interspaces, and are to be inserted into an open end of the tubular transverse element 15 at the side of the bench frame 13. The four portions 17 extend from the connecting portion 14 like appendages, with a free end.

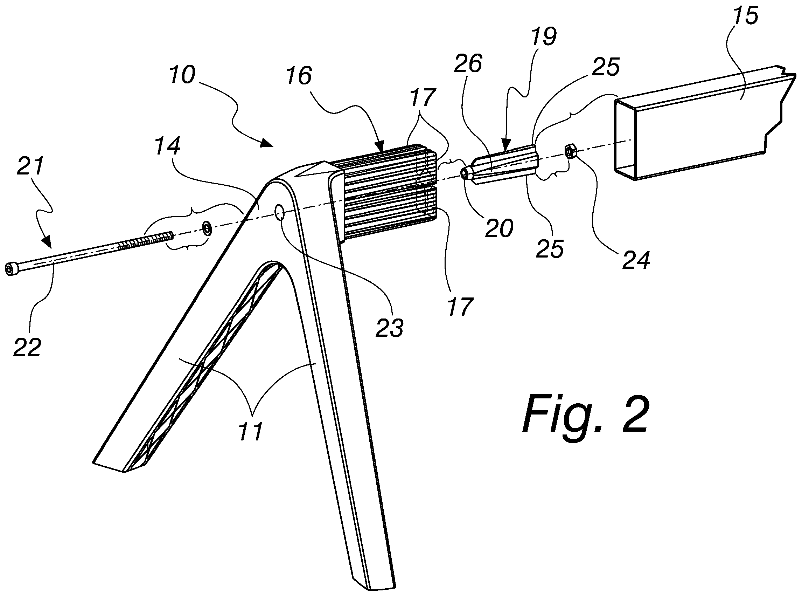

The fixing mechanism 10 also comprises an expander 18 of the first hollow body 16 in the tubular transverse element 15. The expander is generally designated with 18 in the cross-sectional figures, while all its individual components are designated in the exploded view in Figure 2.

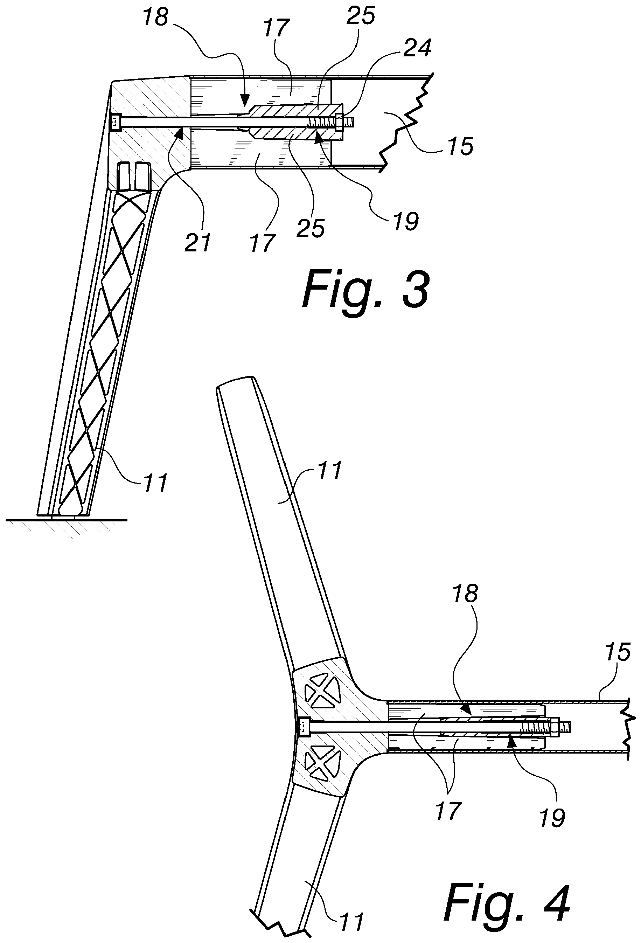

As can clearly be seen, the expander 18 comprises:
- a second hollow body 19 which is extended axially and has an axial hole 20, to be inserted axially into the first hollow body 16 in the opposite direction with respect to the direction for insertion of the first hollow body 16 into the tubular transverse element 15,
- a bolt 21 with a screw 22 to be inserted into a hole 23 of the connecting portion 14 and simultaneously into the axial hole 20 inside the second hollow body 19, from the outer side of the connecting portion 14 and in the same direction for insertion of the first hollow body 16 in the tubular transverse element 15, as shown in cross-section in Figure 3. The hole 23 is conveniently shaped complementarily to the head of the screw 22. The bolt 21 also comprises a nut 24 which is prearranged in a complementarily shaped seat which is provided axially in the second hollow body 19, as shown in Figure 3.

The second hollow body 19 is provided with two wings 25 which extend longitudinally about a central portion 26 thereof, in particular from diametrically opposing sides, above and below in the case shown, and are adapted to be arranged in the respective opposing interspaces which separate the portions 17 of the first hollow body 16.

The central portion 26 is substantially tapered toward the end for insertion into the first hollow body 16. Furthermore the central portion 26 has a cross-section that is squashed laterally and bulged above and below, with respect to the figures that show it.

Use of the fixing mechanism, according to the invention, is as follows.

The supporting portion 11 is associated with the bench frame 13 by inserting the first hollow body 16 thereof into the open end of the tubular transverse element 15 at the side of the bench frame 13.

The screw 22 is inserted into the hole 23 of the connecting portion 14 and is screwed to the nut 24, which is prearranged axially in the complementarily shaped seat of the second hollow body 19.

By screwing the screw 22 into the nut 24, the latter is made to translate in the direction of the connecting portion 14.

The nut 24, in translating, also pushes the second hollow body 19 toward the connecting portion 14, and the former, with the conveniently tapered central portion 26, progressively spaces the portions 17 outwardly, spacing them further apart and so pushing them in interference against the walls of the tubular transverse element 15. The wings 25 contribute to spacing apart the portions 17 and at the same time they prevent the second hollow body 19 from rotating integrally with the screw 22, by coupling it to the sole movement of translation inside the first hollow body 16.

At the end of the fixing, the portions 17 prevent the accidental extraction of the first hollow body 16 from the tubular transverse element 15.

Thanks to the fixing mechanism 10 according to the invention, the supporting portion 11 can easily and rapidly be associated with the remaining bench frame 13 without using numerous screws, which would have a negative effect on the appearance of the bench 12. Furthermore, the aesthetic appearance of the bench is further improved thanks to the fact that at the end of the fixing the mechanism is almost completely hidden inside the bench frame.

In practice it has been found that the invention fully achieves the set aim and object, by providing a mechanism for fixing a supporting portion of a bench to the remaining bench frame, which is capable of associating the two parts rapidly and easily, with an association that is stable and long-lasting, while preventing them from accidentally dissociating, and using a limited number of components.

Furthermore, the fixing mechanism according to the invention is capable of improving the aesthetic impact of benches with respect to what is obtainable with traditional fixing mechanisms.

The invention, thus conceived, is susceptible of numerous modifications and variations, all of which are within the scope of the appended claims.

In practice the materials employed, provided they are compatible with the specific use, and the contingent dimensions and shapes, may be any according to requirements and to the state of the art. This application claims priority from the disclosures in Italian Patent Application No. PD2014A000299 (102014902308065). Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An assembled bench (12) comprising supporting portions (11) and a bench frame (13), said supporting portions (11) each being constituted by a pair of legs provided in a single body shaped like an upside-down V, that extends in a pair from a connecting portion (14) connected to a tubular transverse element (15) of said bench frame (13) acting as a support for laterally adjacent seats, said supporting portion (11) being provided with a fixing mechanism (10) for fixing said connecting portion (14) of said supporting portion (11) of said assembled bench (12) to the tubular transverse element (15) of said bench frame (13), said fixing mechanism (10) **characterized by**:
- a first hollow body (16) which is integral with said connecting portion (14) for connecting said supporting portion (11) to said tubular transverse element (15) of said bench frame (13), said first hollow body (16) extending from the side for association with said bench frame (13) in at least two longitudinal portions (17) which are mutually separated by at least one interspace and are inserted into an open end of said tubular transverse element (15) at the side of said bench frame (13),
- an expander of said first hollow body (16) in said tubular transverse element (15).

2. The assembled bench (12) according to claim 1, **characterized in that** said expander (18) comprises:
- a second hollow body (19) which is extended axially and has an axial hole (20), inserted axially into said first hollow body (16) in the opposite direction with respect to the direction for insertion of said first hollow body (16) into said tubular transverse element (15),
- a bolt (21) with a screw (22) inserted into a hole (23) of said connecting portion (14) and simultaneously in said axial hole (20) inside said second hollow body (19) from the outer side of said connecting portion (14) and in the direction for insertion of said first hollow body (16) into said tubular transverse element (15), said bolt (21) also comprising a nut (24) which is prearranged in a complementarily shaped seat provided axially in said second hollow body (19).

3. The assembled bench (12) according to claim 2, **characterized in that** said second hollow body (19) is provided with wings (25) arranged in respective said interspaces and extending longitudinally around a central portion (26) thereof which is substantially tapered toward the end for insertion into the first hollow body (16).

## Patentansprüche

1. Eine zusammengebaute Bank (12), die Stützabschnitte (11) und einen Bankrahmen (13) umfasst, wobei die Stützabschnitte (11) jeweils aus einem Paar von Beinen bestehen, die in einem einteiligen Körper bereitgestellt sind, der wie ein umgekehrtes V geformt ist, das sich in einem Paar von einem Verbindungsabschnitt (14) erstreckt, der mit einem rohrförmigen transversalen Element (15) des Bankrahmens (13) verbunden ist, welcher als Stütze für seitlich benachbarte Sitze dient, wobei der Stützabschnitt (11) mit einem Befestigungsmechanismus (10) zur Befestigung des Verbindungsabschnitts (14) des Stützabschnitts (11) der zusammengebauten Bank (12) an dem rohrförmigen transversalen Element (15) des Bankrahmens (13) ausgestattet ist, wobei der Befestigungsmechanismus (10) **gekennzeichnet ist durch**:
- einen ersten Hohlkörper (16), der integral mit dem Verbindungsabschnitt (14) ist, um den Stützabschnitt (11) mit dem rohrförmigen transversalen Element (15) des Bankrahmens (13) zu verbinden, wobei sich der erste Hohlkörper (16) in mindestens zwei länglichen Abschnitten (17) von der Seite zur Verbindung mit dem Bankrahmen (13) erstreckt, die voneinander **durch** mindestens einen Zwischenraum getrennt und in ein offenes Ende des rohrförmigen transversalen Elements (15) auf der Seite des Bankrahmens (13) eingesetzt sind,
- einen Spannstab des ersten Hohlkörpers (16) in dem rohrförmigen transversalen Element (15).

2. Die zusammengebaute Bank (12) gemäß Anspruch 1, **dadurch gekennzeichnet, dass** der Spannstab (18) Folgendes umfasst:
- einen zweiten Hohlkörper (19), der sich axial erstreckt und eine Axialbohrung (20) hat, axial in den ersten Hohlkörper (16) eingesetzt in die Richtung entgegengesetzt zur Einführrichtung des ersten Hohlkörpers (16) in das rohrförmige transversale Element (15),
- einen Bolzen (21) mit einer Schraube (22), eingesetzt in eine Bohrung (23) des Verbindungsabschnitts (14) und gleichzeitig in die Axialbohrung (20) innerhalb des zweiten Hohlkörpers (19) von der Außenseite des Verbindungsabschnitts (14) und in der Einführrichtung des ersten Hohlkörpers (16) in das rohrförmige transversale Element (15), wobei der Bolzen (21) auch eine Mutter (24) umfasst, welche im Voraus in einem komplementär geformten Sitz angeordnet ist, der axial in dem zweiten Hohlkörper (19) angebracht ist.

3. Die zusammengebaute Bank (12) gemäß Anspruch 2, **dadurch gekennzeichnet, dass** der zweite Hohlkörper (19) mit Flügeln (25) versehen ist, die in den jeweiligen Zwischenräumen angeordnet sind und sich in Längsrichtung um einen zentralen Abschnitt (26) desselben erstrecken, der zum Einführen in den ersten Hohlkörper (16) zum Ende hin im Wesentlichen spitz zuläuft,

## Revendications

1. Banc assemblé (12) comprenant des portions de support (11) et un châssis de banc (13), lesdites portions de support (11) étant chacune constituées d'une paire de pieds prévus en un seul corps ayant la forme d'un V renversé, qui s'étend en une paire depuis une portion de raccordement (14) raccordée à un élément transversal tubulaire (15) dudit châssis de banc (13) agissant comme un support pour des sièges adjacents latéralement, ladite portion de support (11) étant pourvue d'un mécanisme de fixation (10) pour fixer ladite portion de raccordement (14) de ladite portion de support (11) dudit banc assemblé (12) à l'élément transversal tubulaire (15) dudit châssis de banc (13), ledit mécanisme de fixation (10) étant **caractérisé par** :
- un premier corps creux (16) qui est d'un seul tenant avec ladite portion de raccordement (14) pour raccorder ladite portion de support (11) audit élément transversal tubulaire (15) dudit châssis de banc (13), ledit premier corps creux (16) s'étendant depuis le côté pour une association avec ledit châssis de banc (13) dans au moins deux portions longitudinales (17) qui sont mutuellement séparées par au moins un espace intermédiaire et qui sont insérées dans une extrémité ouverte dudit élément transversal tubulaire (15) du côté dudit châssis de banc (13),
- un extenseur dudit premier corps creux (16) dans ledit élément transversal tubulaire (15).

2. Banc assemblé (12) selon la revendication 1, **caractérisé en ce que** ledit extenseur (18) comprend :
- un second corps creux (19) qui est étendu axialement et a un trou axial (20), inséré axialement dans ledit premier corps creux (16) dans la direction opposée par rapport à la direction d'insertion dudit premier corps creux (16) dans ledit élément transversal tubulaire (15),
- un boulon (21) avec une vis (22) insérée dans un trou (23) de ladite portion de raccordement (14) et simultanément dans ledit trou axial (20) à l'intérieur dudit second corps creux (19) depuis le côté extérieur de ladite portion de raccordement (14) et dans la direction d'insertion dudit premier corps creux (16) dans ledit élément transversal tubulaire (15), ledit boulon (21) comprenant également un écrou (24) qui est pré-agencé dans un siège de forme complémentaire prévu axialement dans ledit second corps creux (19).

3. Banc assemblé (12) selon la revendication 2, **caractérisé en ce que** ledit second corps creux (19) est pourvu d'ailettes (25) agencées dans lesdits espaces intermédiaires respectifs et s'étendant longitudinalement autour d'une portion centrale (26) de celui-ci qui est sensiblement effilée vers l'extrémité pour une insertion dans le premier corps creux (16).
